# EUROPÄISCHE PATENTSCHRIFT

(11) **EP 2 569 525 B1**
(45) Veröffentlichungstag und Bekanntmachung des Hinweises auf die Patenterteilung: **27.07.2016**
(21) Anmeldenummer: 11713699.4
(22) Anmeldetag: 08.04.2011
(51) Int. Cl.: F02B 67/04, F16D 1/02

(54) **VORRICHTUNG ZUM ANTRIEB EINES NEBENAGGREGATES**
AUXILIARY DRIVE
ENTRAÎNEMENT DES AUXILIAIRES

(30) Priorität: 14.05.2010 DE 102010020578
(43) Veröffentlichungstag der Anmeldung: 20.03.2013
(73) Patentinhaber: Bayerische Motoren Werke Aktiengesellschaft, 80809 München (DE)
(72) Erfinder: FREHLAND, Peter, 80999 München (DE)
(86) Internationale Anmeldenummer: PCT/EP2011/001746
(87) Internationale Veröffentlichungsnummer: WO 2011/141105

(56) Entgegenhaltungen:
- EP-A2- 0 985 815
- DE-A1- 19 914 269
- DE-A1-102007 029 965
- DE-A1-102008 056 773
- JP-A- 8 226 451

## Beschreibung

Die Erfindung betrifft eine Vorrichtung zum Antrieb eines Nebenaggregats mit den Merkmalen aus dem Oberbegriff des Patenanspruchs 1.

Zum technischen Umfeld wird beispielsweise auf die deutsche Offenlegungsschrift DE 10 2007 029 965 A1 hingewiesen, aus der eine Hochdruck-Kraftstoffpumpenanordnung mit einem Pumpengehäuse zum Betrieb einer selbstzündenden Brennkraftmaschine bekannt ist. Diese Hochdruck-Kraftstoffpumpenanordnung verfügt über einen Niederdruck- und einen Hochdruckkreislauf und über eine in einem Zylinderkopf der Brennkraftmaschine gelagerte Ventilnockenwelle, mit der die Hochdruck-Kraftstoffpumpenanordnung antreibbar ist. Weiter verfügt die Ventilnockenwelle über eine polygone Ausbildung und Komponenten der Hochdruck-Kraftstoffpumpenanordnung sind in vorteilhafter Weise in dem Zylinderkopf der Brennkraftmaschine integriert.

Weiter wird auf die deutsche Offenlegungsschrift DE 10 2008 024 532 A1 hingewiesen, von der die vorliegende Erfindung ausgeht. In der DE 10 2008 024 532 A1 ist eine Vorrichtung zum Antrieb eines Nebenaggregats, insbesondere einer Hochdruckpumpe einer Brennkraftmaschine bekannt. Hierfür weist die Vorrichtung eine drehbar gelagerte Antriebswelle, bevorzugt eine Nockenwelle der Brennkraftmaschine auf, wobei die Antriebswelle und eine Aggregatewelle des Nebenaggregats über eine Kupplung miteinander in Wirkverbindung stehen. Diese Kupplung ist in bevorzugter und bekannter Weise eine Klauenkupplung.

Eine solche gattungsgemäße Vorrichtung zum Antrieb eines Nebenaggregattes ist jedoch bei hohen Wechselmomenten akustisch auffällig, d. h. laut, toleranzempfindlich, teuer, verschleißgefährdet und verschleißempfindlich.

Aus der DE 199 14 269 A1 ist eine Kupplung zur Kopplung von zwei drehbaren Körpern, insbesondere von einem Zahnrad und einer Antriebswelle, die mit oder ohne Achsversatz im Wesentlichen konzentrisch zueinander angeordnet sind, bekannt.

Die EP 0 985 815 A2 beschreibt einen Verbrennungsmotor, der eine Hochdruckbenzinpumpe umfasst, die von einer Nockenwelle angetrieben ist.

Die DE 10 2007 029965 A1 betrifft eine Hockdruckkraftstoffpumpenanordnung mit einem Pumpengehäuse zum Betrieb einer selbstzündenden Brennkraftmaschine und einen Niederdruck- und einen Hockdruckkreislauf und über eine in einem Zylinderkopf der Brennkraftmaschine gelagerte Ventilnockenwelle betreibbar ist.

Die JP 8 226451 A zeigt einen Wellenverbindungsmechanismus, der eine leicht lösbare Befestigung einer Drehwelle ermöglicht.

Daher liegt der vorliegenden Erfindung die Aufgabe zugrunde, oben genannte Nachteile zu vermeiden.

Diese Aufgabe wird durch die Merkmale im kennzeichnenden Teil des Patentanspruchs 1 gelöst.

Durch die erfindungsgemäße Ausgestaltung ist eine kostengünstige, akustisch unauffällige, toteranzunempfindliche Kupplungslösung zur Anbindung beispielsweise einer Hochdruckpumpennockenwelle an eine vorhandene Einlass- oder Auslassnockenwelle oder beliebige andere Welle dargestellt.

Die Ausgestaltungen gemäß der Patentansprüche 2 und 3 sind besonders bevorzugte Ausführungsbeispiele, die einfach und kostengünstig zu fertigen und akustisch sehr vorteilhaft sind.

Die Ausgestaltung gemäß Patentanspruch 4 wirkt sich nochmals besonders vorteilhaft auf die akustischen Eigenschaften aus.

Mit der Ausgestaltung gemäß Patentanspruch 5 ist ein axialer und WinkelToleranzausgleich für die Aggregatewelle möglich.

Die Vorrichtung gemäß Patentanspruch 6 ist eine besonders bevorzugte Anwendungsvariante.

Im Folgenden ist die Erfindung anhand eines besonders bevorzugten Ausführungsbeispiels in einer einzigen Figur näher erläutert.
- Fig. 1: zeigt einen Schnitt durch eine erfindungsgemäße Vorrichtung zum Antrieb eines Nebenaggregates.
- Fig. 2: zeigt eine dreidimensionale Aufsicht auf ein antriebswellenseitiges Kupplungselement.

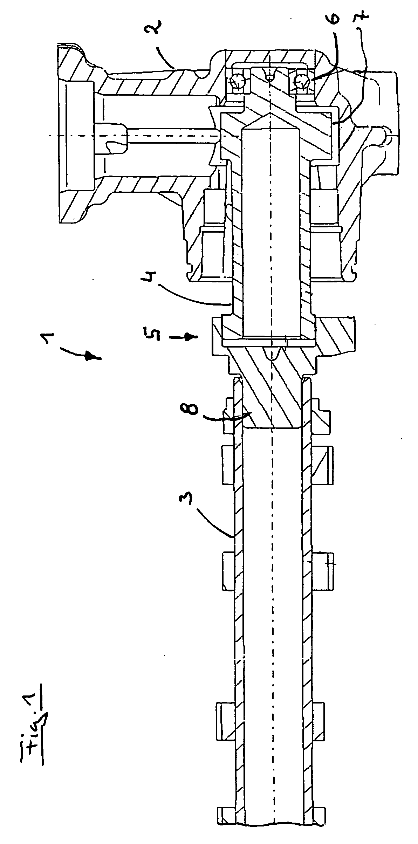

Fig. 1 zeigt einen Schnitt durch eine erfindungsgemäße Vorrichtung 1 zum Antrieb eines Nebenaggregates 2. Zum Antrieb des Nebenaggregates 2 ist eine Antriebswelle 3 vorgesehen, im vorliegenden Ausführungsbeispiel eine Nockenwelle einer nicht dargestellten Brennkraftmaschine. Im vorliegenden Ausführungsbeispiel ist die Nockenwelle hohl, mit aufgeschrumpften Nocken. In weiteren Ausführungsbeispielen kann es sich beispielsweise auch um eine Kurbelwelle handeln oder um eine beliebig andere Antriebswelle der Brennkraftmaschine.

Stirnseitig weist die Antriebswelle 3 ein antriebswellenseitiges Kupplungselement 8 auf, welches drehfest mit der Antriebswelle 3 verbunden ist. In einem weiteren Ausführungsbeispiel kann das antriebswellenseitige Kupplungselement 8 auch von der Antriebswelle 3 selber gebildet sein. Das antriebswellenseitige Kupplungselement 8 stellt eine Seite einer Kupplung 5 dar, mit einem innenprofilierten Wellenende, wobei eine Aggregatewelle 4 des Nebenaggregates 2 ein zu diesem Innenprofil komplementäres Außenprofil aufweist. Besonders bevorzugt handelt es sich bei der Innen- und der Außenprofilierung um ein Polygonprofil.

Das Nebenaggregat 2 ist im vorliegenden Ausführungsbeispiel eine Hochdruckpumpe, die eine, auf der der Antriebswelle 3 gegenüberliegenden Seite angeordnete Lagerung 6 für die Aggregatewelle 4 aufweist, im vorliegenden Ausführungsbeispiel ein Rillenkugellager. Weiter weist die Aggregatewelle 4 eine Nocke 7 zur Betätigung der Hochdruckpumpe auf.

Erfindungsgemäß weist die Aggregatewelle 4 auf der der Kupplung 5 abgewandten Seite die erste Lagerung 6 auf, wobei die Kupplung 5 eine zweite Lagerung für die Aggregatewelle 4 ist. Erfindungsgemäß ist somit eine statische Unbestimmtheit durch die Lagerungen 5, 6 vermieden.

In dem vorliegenden Ausführungsbeispiel weist die Aggregatewelle 4 den Nocken 7 auf, der beim Betrieb der Vorrichtung ein Wechselmoment erzeugt, wobei besonders bevorzugt das Polygonprofil zu diesem Wechselmoment korrespondierend ist. Hierunter ist zu verstehen, dass das Polygonprofil derart ausgerichtet ist, dass das Wechselmoment bestmöglich eliminiert wird. In einem weiteren Ausführungsbeispiel kann auch nur die Antriebswelle 3 einen Nocken aufweisen, wobei in diesem Fall ebenfalls das Polygonprofil zu diesem Wechselmoment korrespondierend ist.

Besonders bevorzugt weist das außen profilierte Wellenende einen umlaufenden Radius in axialer Richtung auf, wodurch ein Toleranzausgleich in axialer Richtung oder ein Winkeltoleranzausgleich möglich ist. In der besonders bevorzugten Ausführungsform ist das Nebenaggregat 2 eine Kraftstoffhochdruckpumpe.

Somit ist eine Kupplungslösung mit einem Polygonprofil zur Kopplung einer Antriebswelle 3, wie beispielsweise eine Einlass- oder Auslassnockenwelle, Kurbelwelle usw. und einer Aggregatewelle 4, wie z. B. einer Antriebswelle einer Hochdruckpumpe, vorgeschlagen, wobei die Kupplung 5 gleichzeitig die Lagerung einer Seite der Aggregatewelle 4 übernimmt.

Die Aggregatewelle 4 ist üblicherweise als eine Nockenwelle ausgeformt. Die am Nocken 7 entstehenden Querkräfte werden durch die separate Lagerung 6 und die Kupplung 5 aufgenommen. Durch die Querkräfte wird die spielbehaftete Kupplung 5 immer an eine definierte Anlage gedrückt, was akustische Vorteile bringt. Bei gleichzeitiger radialer Belastung z. B. durch einen Pumpenstößel auf einen auf der Welle angebrachten Nocken, findet bei Drehmomentwechsel eine akustisch vorteilhafte Abrollbewegung im Rahmen des Spiels zwischen dem antriebswellenseitigen Kupplungselement 8 und der Aggregatewelle 4 statt. Die Lagerung 5 kann ein Polygonprofil mit drei, vier oder zwei Ecken aufweisen, vorzugsweise entsprechen diese der Anzahl der Pumpen Nockenerhebungen oder einer anderen Anzahl. Vorzugsweise kann diese Ausgestaltung kombiniert werden mit gleichzeitiger Radialbelastung auf die angetriebene Welle durch Ausbildung des Polygonprofils durch zwei tangential anschließende Radien. Somit ist die Kupplung 5 tolerant gegen Winkelversatz der Wellen 3, 4 durch eine vorzugsweise ballige Ausführung mittels umlaufenden Radius.

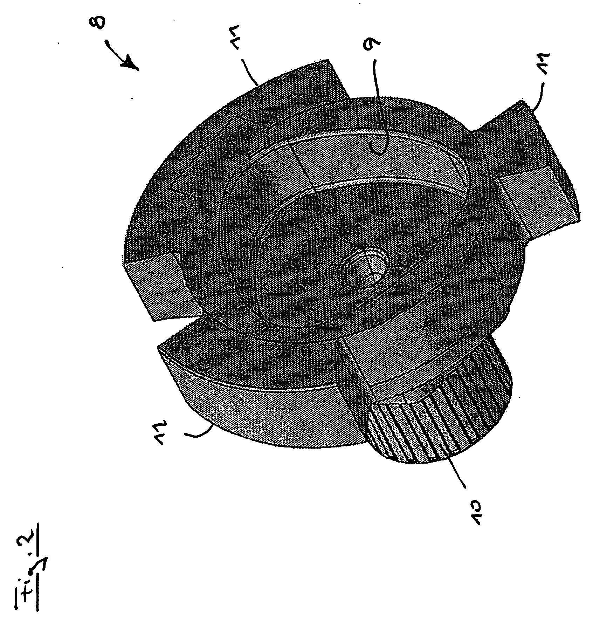

Fig. 2 zeigt eine dreidimensionale Aufsicht auf das antriebswellenseitige Kupplungselement 8 mit einem innenprofilierten Wellenende 9, in diesem Ausführungsbeispiel mit einem Polygonprofil, in das das korrespondierende Außenpolygonprofil der Aggregatewelle 4 einbringbar ist. Weiter weist in diesem Ausführungsbeispiel das antriebswellenseitige Kupplungselement 8 drei erhabene Bereiche 11 auf, mit denen von einem nicht dargestellten Sensor die absolute Winkellage der Antriebwelle 3 detektiert werden kann. An dem, dem innenprofilierten Wellenende 9 abgewandten Seite weist das antriebswellenseitige Kupplungselement 8 ein Außenprofil 10 auf, das als Verdrehsicherung zwischen dem antriebswellenseitige Kupplungselement 8 und der Antriebswelle 3 dient.

Fazit:
Durch die erfindungsgemäße Ausgestaltung ist eine kostengünstige, akustisch unauffällige, toleranzunempfindliche Kupplungslösung zur Anwendung beispielsweise einer Hochdruckpumpennockenwelle an eine vorhandene Einlass- oder Auslassnockenwelle oder beliebige andere Welle erzielt.

### Bezugszeichenliste:

- 1.: Vorrichtung
- 2.: Nebenaggregat
- 3.: Antriebswelle
- 4.: Aggregatewelle
- 5.: Kupplung
- 6.: Lagerung
- 7.: Nocke
- 8.: antriebswellenseitiges Kupplungselement
- 9.: innenprofiliertes Wellenende
- 10.: Außenprofil
- 11.: erhabener Bereich

## Patentansprüche

1. Vorrichtung (1) zum Antrieb eines Nebenaggregates (2), insbesondere einer Hochdruckpumpe, mit einer drehbar gelagerten Antriebswelle (3) einer Brennkraftmaschine, wobei die Antriebswelle (3) und eine Aggregatewelle (4) des Nebenaggregates (2) über eine Kupplung (5) miteinander in Wirkverbindung stehen,
**dadurch gekennzeichnet, dass** die Aggregatewelle (4) auf der der Kupplung (5) abgewandten Seite eine erste Lagerung (6) aufweist und die Kupplung (5) eine zweite Lagerung für die Aggregatewelle (4) ist.

2. Vorrichtung nach Patentanspruch 1,
**dadurch gekennzeichnet, dass** die Kupplung (5) aus einem innenprofilierten Wellenende und einem komplementären außenprofilierten Wellenende besteht.

3. Vorrichtung nach Patentanspruch 2,
**dadurch gekennzeichnet, dass** die Innen- und die Außenprofilierung ein Polygonprofil ist.

4. Vorrichtung nach Patentanspruch 3,
**dadurch gekennzeichnet, dass** die Antriebswelle (3) und/oder die Aggregatewelle (4) zumindest einen, beim Betrieb der Vorrichtung ein Wechselmoment erzeugenden Nocken (7) aufweist und das Polygonprofil zu diesem Wechselmoment korrespondierend ist.

5. Vorrichtung nach einem der Patentansprüche 2 bis 4,
**dadurch gekennzeichnet, dass** das außenprofilierte Wellenende einen umlaufenden Radius in axialer Richtung aufweist.

6. Vorrichtung nach einem der Patentansprüche 1 bis 5,
**dadurch gekennzeichnet, dass** das Nebenaggregat (2) eine Kraftstoff-Hochdruckpumpe ist.

## Claims

1. A device (1) for driving an ancillary unit (2), especially a high-pressure pump, having a rotatably mounted drive shaft (3) of an internal combustion engine, wherein the drive shaft (3) and a unit shaft (4) of the ancillary unit (2) are operatively interconnected by a coupling (5), **characterised in that** the unit shaft (4) has a first mount (6) on the side remote from the coupling (5) and the coupling (5) is a second mount for the unit shaft (4).

2. A device according to claim 1,
**characterised in that** the coupling (5) comprises an inner-profiled shaft end and a complementary outer-profiled shaft end.

3. A device according to claim 2,
**characterised in that** the inner profiling and the outer profiling is a polygonal profile.

4. A device according to claim 3,
**characterised in that** the drive shaft (3) and/or the unit shaft (4) has at least one cam (7) which generates an alternating torque during operation of the device and the polygonal profile corresponds to this alternating torque.

5. A device according to any one of claims 2 to 4,
**characterised in that** the outer-profiled shaft end has a rotating radius in the axial direction.

6. A device according to any one of claims 1 to 5,
**characterised in that** the ancillary unit (2) is a high-pressure fuel pump.

## Revendications

1. Dispositif (1) permettant d'entraîner un groupe auxiliaire (2), en particulier une pompe haute pression comprenant un arbre d'entraînement (3) d'un moteur à combustion interne monté mobile en rotation, cet arbre d'entraînement (3) et un arbre de groupe (4) du groupe auxiliaire (2) étant en liaison fonctionnelle par l'intermédiaire d'un embrayage (5),
**caractérisé en ce que**
l'arbre de groupe (4) comporte un premier palier (6) monté du côté situé à l'opposé de l'embrayage (5), et l'embrayage (5) constitue un second palier pour l'arbre de groupe (4).

2. Dispositif conforme à la revendication 1,
**caractérisé en ce que**
l'embrayage (5) est constitué par une extrémité d'arbre à profilage interne et une extrémité d'arbre à profilage externe complémentaire.

3. Dispositif conforme à la revendication 2,
**caractérisé en ce que**
le profilage interne et le profilage externe sont des profils polygonaux.

4. Dispositif conforme à la revendication 3,
**caractérisé en ce que**
l'arbre d'entraînement (3) et/ou l'arbre de groupe (4) comprend au moins une came (7) produisant un couple alternatif lors du fonctionnement du dispositif et le profil polygonal correspond à ce couple alternatif.

5. Dispositif conforme à l'une des revendications 2 à 4,
**caractérisé en ce que**
l'extrémité d'arbre à profilage externe a un rayon rotatif en direction axiale.

6. Dispositif conforme à l'une des revendications 1 à 5,
**caractérisé en ce que**
le groupe auxiliaire (2) est une pompe de carburant à haute pression.
